# EUROPÄISCHE PATENTSCHRIFT

(11) **EP 0 891 536 B1**
(45) Veröffentlichungstag und Bekanntmachung des Hinweises auf die Patenterteilung: **13.08.2003**
(21) Anmeldenummer: 96943934.8
(22) Anmeldetag: 12.12.1996
(51) Int. Cl.: G01H 1/00, G07C 3/00

(54) **SYSTEM ZUM ÜBERWACHEN VON SCHWINGUNGSERREGTEN AGGREGATEN**
SYSTEM FOR MONITORING UNITS EXCITED BY OSCILLATIONS
SYSTEME DE SURVEILLANCE POUR APPAREILS A EXCITATION PAR OSCILLATIONS

(43) Veröffentlichungstag der Anmeldung: 20.01.1999
(73) Patentinhaber: Prüftechnik Dieter Busch AG, 85737 Ismaning (DE)
(72) Erfinder: FRANKE, Dieter, D-85737 Ismaning (DE); BÜHLER, Steffen, D-85774 Unterföhring (DE); WEICHSELBAUER, Martin, D-85737 Ismaning (DE)
(86) Internationale Anmeldenummer: EP9605567
(87) Internationale Veröffentlichungsnummer: WO98028599

(56) Entgegenhaltungen:
- EP-A- 0 002 232
- EP-A- 0 230 712
- WO-A-95/08806
- US-A- 4 520 674
- US-A- 4 612 620
- US-A- 4 885 707

## Beschreibung

Die Erfindung betrifft ein System zum Überwachen von schwingungserregten Aggregaten mit den im Oberbegriff des Anspruchs 1 genannten Merkmalen.

Aus der US PS 4,612,620 ist bekannt, schwingungserregte Aggregate mittels einer sogenannten Route zu überwachen. Im Sinne der vorliegenden Beschreibung wird unter schwingungserregte Aggregate verstanden, daß es sich um einzelne oder auch mehrere Maschinen, Produktionsanlagen, Hilfseinrichtungen, Bauteile oder sonstige Anlagen beliebiger Art handelt, die in einem bestimmten Zusammenhang zueinander zu betrachten sind, beispielsweise daß sie alle zu einer gemeinsamen Anlage gehören. Die Route beinhaltet, daß an den Aggregaten definierte Meßpunkte in einer bestimmten Reihenfolge innerhalb einer bestimmten Zeitspanne mit einer Meßaufgabe belegt werden. Hierzu ist ein tragbares Meßgerät vorgesehen, das Bedienelemente, Speicher, Mikroprozessoren sowie eine Anzeige aufweist. In dieses Meßgerät können über einen übergeordneten Rechner (Zentraleinheit) für jeden der möglichen Meßpunkte relevante Meßaufgaben mit zugehörigen, passenden Meßeinstellungen eingespeichert werden. Mittels dieses tragbaren Meßgerätes kann an jedem Meßpunkt somit eine bestimmte Messung, beispielsweise Frequenzanalysen von Schwingungen usw., durchgeführt werden. Die so erhaltenen Meßergebnisse werden in dem tragbaren Meßgerät gespeichert. Nach Ablauf der Route kann das tragbare Meßgerät wiederum mit dem übergeordneten Rechner verbunden werden, worauf eine Auswertung aller gespeicherten Meßergebnisse aller mit einer Meßaufgabe belegten Meßpunkte erfolgt.

Eine Haupteigenschaft der Route ist es somit, daß die Meßaufgaben in der Reihenfolge der späteren Abarbeitung in der Zentraleinheit gespeichert werden, diese Reihenfolge dem Meßgerät übermittelt wird, so daß die Meßaufgaben in dem Meßgerät automatisch in der vorgegebenen Reihenfolge angezeigt werden.

Bekannt ist es, als Meßaufgaben das Messen von Einzelmeßgrößen für eine Zustandsbewertung des die Meßpunkte aufweisenden Aggregates zu verwenden. Diese Einzelmeßgrößen sind nicht auf die jeweiligen Meßpunkte spezifiziert, sondern werden regelmäßig entsprechend der festgelegten Route erfaßt und nach Überspielung der Meßergebnisse in die Zentraleinheit hinsichtlich eines Trends der Entwicklung der Meßergebnisse und/oder einem Schwellwertvergleich zugeführt. Da bekanntermaßen eine konkrete Ursachenerkennung eines Fehlers nur über eine Signalmessung erfolgen kann, wobei vorzugsweise bestimmte Linien in aufgenommenen Frequenzspektren von Spezialisten bestimmten Fehlerursachen bei der Auswertung zugeordnet werden können. Um diese Signalmessungen durchzuführen, ist ein zweiter Routengang erforderlich, damit an den mit dem ersten Routengang ermittelten Meßpunkten, an denen die Auswertung der gemessenen Einzelmeßgrößen das Überschreiten eines Schwellwertes signalisiert, die Signalmessungen durchgeführt werden können. Um diesen zweiten Routengang durchführen zu können, ist eine Aufstellung von spezifischen Meßeinstellungen der Signalmessungen von einem Spezialisten, entweder an der Zentraleinheit oder vor Ort, am jeweiligen Meßpunkt am Meßgerät erforderlich.

Eine weitere bekannte Route besteht darin, daß an jedem ausgewählten Meßpunkt der Route komplette Signalmessungen durchgeführt werden, ohne daß vorher über eine Einzelmeßgröße eine Zustandsbewertung dieses Meßpunktes erfolgte. Da die Signalmessungen zum Überwachen von schwingungserregten Aggregaten, beispielsweise eine Frequenzanalyse, relativ kompliziert ist, muß das Meßgerät eine entsprechend große Kapazität aufweisen. Insbesondere muß genügend Speicherplatz zur Speicherung der Meßaufgaben, der Meßprogramme und der Meßergebnisse vorhanden sein, darüber hinaus ist zur ordnungsgemäßen Abarbeitung dieser Punkte ein im Verhältnis aufwendiges Software-Paket vorzuhalten.

Der Erfindung liegt daher die Aufgabe zugrunde, ein System der gattungsgemäßen Art anzugeben, das diese Nachteile nicht aufweist.

Erfindungsgemäß wird diese Aufgabe mit einem System mit den im Anspruch 1 genannten Merkmalen gelöst. Dadurch, daß in der Zentraleinheit für jeden der Meßpunkte eine Standardmeßaufgabe und wenigstens eine erweiterte Meßaufgabe abgelegt ist, die entsprechend der gewählten Route in das Meßgerät geladen werden, an den Meßpunkten nur die Standardmeßaufgabe ausgeführt wird und in Abhängigkeit des Eintritts eines den Meßpunkt aufweisenden Aggregates zuordbaren, registrierbaren Ereignisses an diesem Meßpunkt wenigstens eine der erweiterten Meßaufgaben automatisch angezeigt und durchgeführt wird und die Meßergebnisse der durchgeführten Standard- und erweiterten Messungen in die Zentraleinheit übertragen und dort ausgewertet werden, ist es vorteilhaft möglich, vorab zu jedem Meßpunkt ein wenigstens zweistufiges Fehlerprofil festzulegen, mit dem das Meßgerät entsprechend der in der festgelegten Route sich befindenden Meßpunkte aktiviert wird, wobei die Fehlerprofile eine einfache Einstufung des Meßergebnisses in vorgegebenen Kategorien beinhaltet, bei Überschreiten einer festgelegten Kategorie innerhalb des Fehlerprofils ein Alarmsignal generiert wird und erst dann die wenigstens eine erweiterte Meßaufgabe, vorzugsweise eine Signalmeßaufgabe, für diesen Meßpunkt automatisch durchgeführt wird.

Es ist möglich, eine Bedienung zu ermöglichen, die nicht eines speziell ausgebildeten Spezialisten bedarf. Insbesondere durch die Einteilung in die wenigstens zweistufige Messung, wobei vorzugsweise die erste Messung lediglich aus der Erfassung einer einfachen Einzelkenngröße besteht, ist die Handhabung sehr einfach. Erst dann, wenn innerhalb dieser Einzelkenngröße am Meßpunkt ein Signal erfaßt wird, das in eine vorher festgelegte, nicht zu überschreitende Kategorie fällt, wird das Alarmsignal ausgelöst, so daß der Bediener akustisch und/oder optisch erkennt, daß an diesem Meßpunkt eventuell ein Fehler vorliegt. Diese Meldung löst gleichzeitig eine konkrete Analyse des Meßpunktes mit der höherstufigen Messung aus, das heißt, es erfolgt die wenigstens eine für diesen konkreten Meßpunkt im Meßgerät abgelegte Signalmessung.

In bevorzugter Ausgestaltung der Erfindung ist vorgesehen, daß bei der Messung der Einzelkenngröße innerhalb der Standardmessung zur automatischen Erkennung eines Fehlers beziehungsweise einer Zustandsverschlechterung wenigstens ein Schwellwert, vorzugsweise drei Schwellwerte, zu jeder Einzelkenngröße hinterlegt sind. Somit erfolgt die Einteilung der gemessenen Einzelkenngrößen in vier Kategorien, die jeweils durch die Schwellwerte getrennt sind, die jeweils einem Fehlerprofil entsprechen.

Insgesamt wird mit dem erfindungsgemäßen System einem Meßgerät und der Bearbeitung beziehungsweise Auswertung der Route in der Zentraleinheit eine einfache Bedienung verliehen, so daß ein Spezialist lediglich in Bereitschaft zu halten ist, das heißt, dieser braucht erst im akuten Fall eingesetzt zu werden. Hierdurch ergibt sich eine Einsparung an qualifiziertem Fachpersonal, da dieses nicht mehr die routinemäßige Abarbeitung der vorher festgelegten Route, da erfahrungsgemäß an der weitaus größten Anzahl der Meßpunkte keine Fehlermeldung erfolgt, durchführen muß. Gleichzeitig kann die Speicherkapazität des Meßgerätes und die Speicherkapazität der Zentraleinheit geringer gehalten werden, da die Signalmeßaufgaben nur im akuten Fall abgearbeitet werden und entsprechende Ergebnisse abzuspeichern sind. Schließlich muß die Route nur einmal abgelaufen werden, um eine Standardmessung und gegebenenfalls eine erweiterte Messung (Signalmessung) durchzuführen.

Ferner ist in bevorzugter Ausgestaltung der Erfindung vorgesehen, daß die wenigstens eine Standardmeßaufgabe und/oder die wenigstens eine erweiterte Meßaufgabe als spezifische, typisierbare, zugeschnittene Meßaufgaben gleichen oder gleichartigen Maschinenteilen mit Meßpunkten zugeordnet sind. Hierdurch wird es vorteilhaft möglich, die Abarbeitung der Route innerhalb einer Anlage, bei der mehrere unterschiedliche Aggregate gleiche oder gleichartige Maschinenteile aufweisen können, für diese gleichen oder gleichartigen Maschinenteile jeweils spezifische, typisierbare, zugeschnittene Meßaufgaben vorzugeben, um zuverlässig den Zustand mittels der Standardmessung und/oder zuverlässig die Ursachenerkennung mittels der erweiterten Messung durchzuführen, um zuverlässig registrierbare Ereignisse zu gewinnen. Für die gleichen oder gleichartigen typischen Maschinenteile können weiterhin fixe Daten, typisierte Darstellungsformen, Bewertungsalgorithmen und die Zuordnung von Standardmeßaufgaben und/oder erweiterten Meßaufgaben den Meßpunkten der Maschinenteile in der Zentraleinheit zur einfachen und zuverlässigen Erstellung der Routen abgelegt werden.

In bevorzugter Ausgestaltung der Erfindung ist vorgesehen, daß zusätzlich zu der vorgesehenen Route einer Anlage oder eines Anlagenteils ein Pool aller in der Zentraleinheit bekannten Meßpunkte der überwachten, schwingungserregten Aggregate und/oder Maschinenteile der Aggregate einer Anlage (Fabrik) im Hintergrund des Meßgerätes angelegt wird, so daß der die eigentlich festgelegte Route abarbeitende Routengänger erforderlichenfalls auch Meßpunkte mit einer Meßaufgabe, zumindest als Standardmeßaufgabe abarbeiten kann, die nicht in der Route vorgegeben sind. Hierdurch wird es möglich, bei Auftreten von offensichtlichen, erst während des Routenganges festgestellten Unregelmäßigkeiten an einer bestimmten Maschine beziehungsweise Maschinenteil auch dort eine Überprüfung vorzunehmen.

Weiterhin ist bevorzugt, wenn die Standardmeßaufgabe anstelle der Messung einer Einzelkenngröße die Messung eines Signals beziehungsweise eines Signalabschnittes umfaßt. Die erweiterte Meßaufgabe kann darüber hinaus bevorzugterweise anstelle der Messung eines Signalverlaufs die Messung einer Einzelkenngröße sein. Somit ergeben sich auf die vorhandenen Meßpunkte an den Aggregaten beziehungsweise an den Bauteilen von Aggregaten spezifische, zugeschnittene Routen, die über die Zentraleinheit vorgegeben werden können. Je nach Aggregat beziehungsweise Bauteil von Aggregaten kann so entschieden werden, ob über eine Einzelkenngröße oder über ein Signal eine optimalere Abarbeitung der Standardmeßaufgabe möglich ist. Für die erweiterte Meßaufgabe gilt ebenfalls, daß je nach spezifischen, den Meßpunkt aufweisenden Aggregat beziehungsweise Bauteile des Aggregats die erweiterte Meßaufgabe optimiert werden kann, indem beispielsweise ein Signalverlauf oder eine Einzelkenngröße als erweiterte Meßaufgabe vorgegeben wird.

Darüber hinaus ist in weiterer bevorzugter Ausgestaltung der Erfindung vorgesehen, daß bei Nichteintritt eines registrierbaren Ereignisses an einem ersten von mehreren, einem Aggregat und/oder Maschinenteil eines Aggregats zugeordneten Meßpunkt die wenigstens eine Standardmeßaufgabe an den weiteren, diesem Aggregat und/oder Maschinenteil zugeordneten Meßpunkten übersprungen wird. Hierdurch wird eine weitere Vereinfachung der Route möglich. Dadurch, daß an einem ersten Meßpunkt, der beispielsweise ein Hauptmeßpunkt eines Aggregats und/oder eines Maschinenteils ist, bereits kein registrierbares Ereignis festgestellt wird, das den Eintritt eines Fehlers signalisiert, darauf geschlossen werden kann, daß an den weiteren Meßpunkten, beispielsweise Nebenmeßpunkten, des gleichen Aggregates und/oder gleichen Maschinenteils ebenfalls kein registrierbares Ereignis zu erwarten ist. Die Durchführung beziehungsweise der Ablauf der Route wird hierdurch vereinfacht beziehungsweise verkürzt.

Ferner ist bevorzugt, wenn an dem ersten von mehreren Meßpunkten die wenigstens eine Standardmeßaufgabe für die weiteren Meßpunkte automatisch angezeigt und durchgeführt wird. Hierdurch ist es vorteilhaft möglich, durch einmaliges Andocken des Meßgerätes an dem ersten, dem Hauptmeßpunkt eines Aggregates und/oder Maschinenteils des Aggregates alle Standardmeßaufgaben für die weiteren Meßpunkte dieses Aggregats und/oder Maschinenteils durchzuführen. Erst bei Eintritt eines registrierbaren Ereignisses wird automatisch angezeigt, an welchen, maximal allen, weiteren Meßpunkten wenigstens eine Standardmeßaufgabe zu wiederholen ist beziehungsweise dort wenigstens eine erweiterte Meßaufgabe durchzuführen ist. Insgesamt ergeben sich so in einfacher Weise Optimierungen der durchgeführten Route.

Weitere vorteilhafte Ausgestaltungen der Erfindung ergeben sich aus den übrigen in den Unteransprüchen genannten Merkmalen.

Die Erfindung wird nachfolgend in Ausführungsbeispielen anhand der zugehörigen Zeichnungen näher erläutert. Es zeigen:
- Figur 1: ein Blockschaltbild des erfindungsgemäßen Systems und
- Figur 2: ein Ablaufplan einer Messung an einem Meßpunkt der Route.

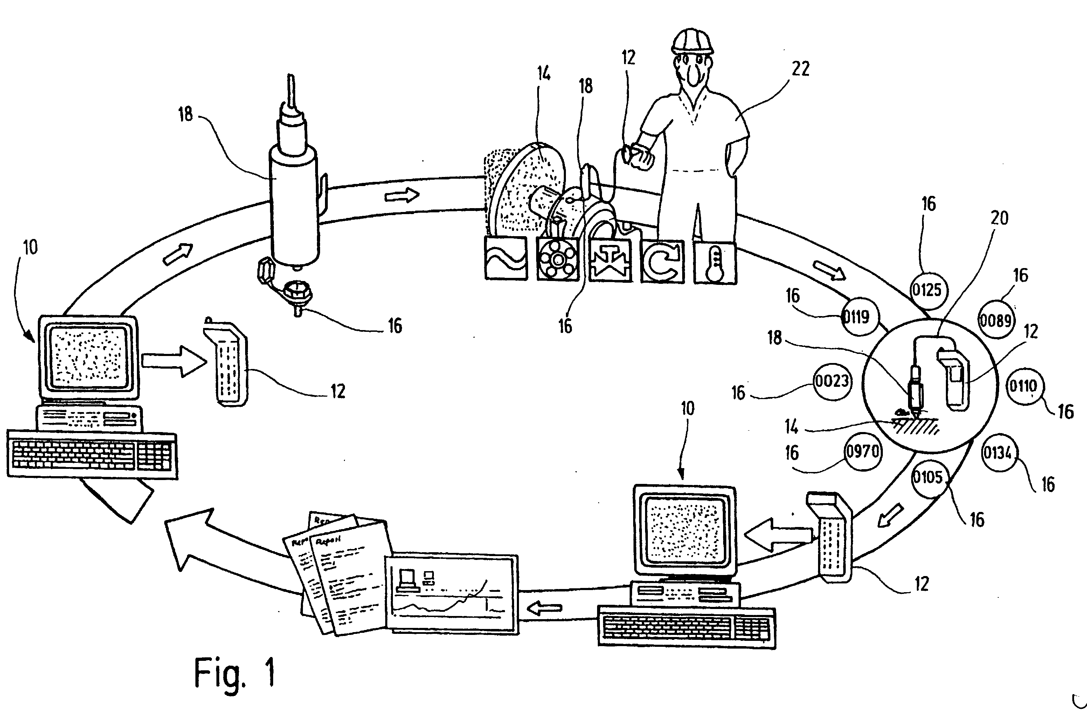

In der Figur 1 ist das System in einem Blockschaltbild gezeigt, auf das sich die Erfindung bezieht. Das System umfaßt eine rechnergesteuerte Zentraleinheit 10 sowie ein rechnergesteuertes, transportables Meßgerät 12. Ferner umfaßt das System schwingungserregte Aggregate 14, von denen in Figur 1 lediglich eins gezeigt ist. Unter Aggregat wird verstanden, daß es sich um eine gesamte Maschine handelt, die in Einzelmaschinen unterteilt sein kann, und die aus zu überwachenden Maschinenteilen besteht. Die Aggregate 14 weisen wenigstens einen Meßpunkt 16 auf, an den mittels eines Übertragungsgliedes 18 das Meßgerät 12 anschließbar ist. Hierzu kann das Übertragungsglied 18 eine Schnittstelle aufweisen, die über ein Übertragungskabel 20 mit einer Schnittstelle des Meßgerätes 12 verbindbar ist.

Das System zeigt folgende Funktion:

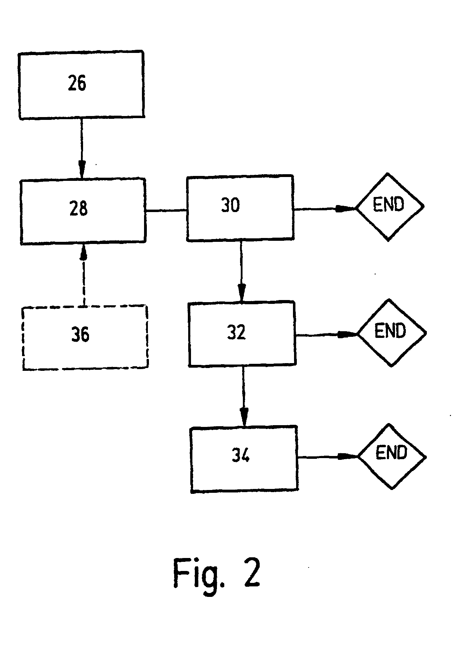

Mittels der Zentraleinheit 10 wird in das Meßgerät 12 eine Route geladen. Die Route umfaßt eine bestimmte wählbare Anzahl konkreter Meßpunkte 16 der ausgewählten Aggregate 14. Im Beispiel sind acht Meßpunkte 16 angenommen. Dies können sowohl alle zur Verfügung stehenden Meßpunkte 16, aber auch eine Auswahl von Meßpunkten 16 sein. Für jeden der in der Route ausgewählten Meßpunkte 16 wird das Meßgerät 12 mit einer Standardmeßaufgabe und wenigstens einer erweiterten Meßaufgabe, nachfolgend auch Signalmeßaufgabe genannt, geladen, wie anhand von Figur 2 noch näher erläutert wird. Standardmeßaufgaben sind vorzugsweise die Ermittlung von Einzelkenngrößen, die der Erkennung des Zustands eines Maschinenteils über einen einfachen Schwellwertvergleich dienen. Signalmeßaufgaben sind vorzugsweise Signalmessungen, die der Ursachenerkennung bei Zustandverschlechterungen dienen. Die Ursachenerkennung erfolgt über frequenzselektive Fehlerprofile, das heißt die Amplituden bestimmter Prequenzanteile (Linien oder Bänder) werden wiederum wie Einzelkenngrößen behandelt, jedoch für jeweils einen spezifischen Fehlertyp oder -ursache. Zur Zuordnung spezifischer Standardmeßaufgaben und erweiterter Meßaufgaben werden diese den Meßpunkten 16 an Aggregaten (Maschinenteilen) 14 zugeordnet, da die Meßeinstellungen hauptsächlich von der Art des Maschinenteils (Beispiel Wellenschwingung, Maschinenschwingstärke am lagergehäuse, Wälzlager), aber auch dem Aggregattyp und der Drehzahl abhängen. Ebenso ordnen sich spezifische Signalmeßaufgaben diesen bestimmten Maschinenteilen zu. Beispielsweise kann der Pegel eines einzelnen bestimmten Frequenzbandes aus dem gesamten Frequenzverlauf des Signals die Einzelkennkenngröße der Standardmeßaufgabe sein, die mit registrierbaren Ereignissen zu erweiterten Meßaufgaben führt, die der gleiche, aber gesamte Frequenzverlauf sein kann.

Ein Routengänger 22 läuft nachfolgend mit dem Meßgerät 12 die durch die Zentraleinheit 10 vorgegebene Route der zu überprüfenden Meßpunkte 16 ab. Hierbei wird das Meßgerät 12 über das Übertragungsglied 18 mit dem Meßpunkt 16 gekoppelt und die für diesen Meßpunkt 16 vorgegebene Standardmeßaufgabe abgearbeitet. Tritt kein registrierbares Ereignis, das ebenfalls noch näher anhand von Figur 2 erläutert wird, ein, wird ein Standardmeßergebnis in dem Meßgerät dem gerade aktuellen Meßpunkt 16 zugeordnet und abgelegt. Die Messung an diesem Meßpunkt 16 ist damit beendet.

Tritt während der Standardmessung ein registrierbares Ereignis auf, kann dies dem Routengänger 22 optisch und/oder akustisch am Meßgerät 12 angezeigt werden. Daraufhin kann wenigstens eine hier vorgesehene erweiterte Meßaufgabe (Signalmeßaufgabe) an diesem Meßpunkt 16 abgearbeitet werden, da diese automatisch als erweiterte Meßaufgabe in der Route zur Durchführung angezeigt wird, dessen Meßergebnisse ebenfalls in dem Meßgerät 12 gespeichert werden.

Entsprechend der festgelegten Route werden von dem Routengänger 22 sämtliche Meßpunkte 16 einer Route abgearbeitet. Nach Beendigung der Route werden die in dem Meßgerät 12 gespeicherten Meßergebnisse der Standardmessungen und gegebenenfalls von Signalmessungen im Wege der Datenübertragung der Zentraleinheit 10 zugeführt. Die Zentraleinheit 10 wertet die Standardmeßergebnisse als Trend über der Langzeit und die Signalmeßergebnisse über einen Zeit- und/oder Frequenzverlauf aus und stellt auswertbare Protokolle, beispielsweise in Form von Ausdrucken oder auf einem Bildschirm für einen auswertenden Spezialisten zur Verfügung. Auf Basis dieser Auswertungen kann entschieden werden, ob bestimmte Teile und/oder ganze Aggregate 14 aufgrund aufgetretener Störungen repariert beziehungsweise ausgetauscht werden müssen.

Insgesamt wird durch die Einteilung in Standardmeßaufgaben und nur im Bedarfsfalle durchzuführende Signalmeßaufgaben für jeden Meßpunkt 16 der durchzuführenden Route eine automatische Anpassung der Anzahl und des Aufwands der Signalmessungen je nach Zustand der zu überwachenden schwingungserregten Aggregate 14 in der Route erreicht. Für den Fall, daß keine registrierbaren Ereignisse innerhalb der Standardmessungen auftreten, wird der mit der Durchführung, der Speicherung und der Auswertung der Signalmessungen verbundene Aufwand drastisch reduziert. Die Durchführung der Messungen in der Route werden somit insgesamt einfacher und übersichtlicher, ohne daß die Qualität der Überwachung der schwingungserregten Aggregate beeinträchtigt ist.

In der Figur 2 ist in einem Ablaufplan die Durchführung der Messung an einem Meßpunkt 16 der Route verdeutlicht. Es ist klar, daß die hier für einen Meßpunkt 16 erläuterte Messung selbstverständlich für alle Meßpunkte 16 der Route gilt.

Das mit der Route geladene Meßgerät 12 wird mit dem Meßpunkt 16 in einem ersten Schritt 26 verbunden. Anschließend erfolgt in einem nächsten Schritt 28 die Durchführung der Standardmeßaufgabe. Die Standardmeßaufgabe besteht in der Messung einer Einzelkenngröße. Die zu messende Einzelkenngröße wird zur automatischen Bewertung der Meßergebnisse beziehungsweise zur Erkennung einer Zustandsverschlechterung beispielsweise drei Schwellwerte zugeordnet, die die theoretisch zu erwartenden Meßergebnisse der Einzelkenngröße in Kategorien, bei drei Schwellwerten in vier Kategorien, einteilt, die jeweils von den Schwellwerten getrennt sind. Die Einzelkenngrößen einer Kategorie sind zu einem Fehlerprofil zusammengefaßt. Wenigstens einer der Schwellwerte bildet eine Alarmschwelle. Nach einem konkreten Beispiel kann die zu messende Einzelkenngröße einen Wert von 0 bis 9 einer Anzeige annehmen. Innerhalb dieser Werte 0 bis 9 sind Schwellwerte definiert, die beispielsweise bei den Werten 2, 4 und 6 liegen können. Somit ist eine Zuordnung der tatsächlich gemessenen Einzelkehngröße zu einem bestimmten Wert möglich, der eine Einstufung in ein bestimmtes Fehlerprofil gestattet. Innerhalb dieser Werte wird eine Alarmschwelle festgelegt, die beispielsweise bei dem Wert 6 liegt. Während der Standardmessung 28 wird die gemessene, spezifische, auf den jeweiligen Meßpunkt 16 zugeschnittene Meßgröße, beispielsweise das Frequenzspektrum dieser Meßgröße für die Einzelkenngrößen zugeordnet, das heißt, es wird die Wertigkeit des gemessenen Standardsignals in einem nächsten Arbeitsschritt 30 bestimmt. Ist beispielsweise eine Einstufung in den Wert 4 erfolgt, wird diese Einstufung, bezogen auf den gerade aktuellen Meßpunkt 16, im Meßgerät 12 abgespeichert und der Routengänger 22 optisch und/oder akustisch am Meßgerät 12 aufgefordert, den nächsten Meßpunkt 16 der Route aufzusuchen. Da die angenommene Wertigkeit 4 des gemessenen Standardmeßsignals unterhalb der beispielhaft genannten Wertigkeit 6, die die Alarmschwelle darstellt, liegt, sind in dem diesen Meßpunkt 16 zugeordneten Aggregat 14 keine Schädigungen anzunehmen, die einer detaillierteren Überprüfung bedürfen.

Hat der Vergleich 30 ergeben, daß die Wertigkeit des gemessenen Standardmeßsignals über der festgelegten Alarmschwelle liegt, bei dem genannten Beispiel liegt das Standardmeßsignal beispielsweise bei einer Wertigkeit von 8, wird dem Routengänger 22 über das Meßgerät 12 angezeigt, daß an diesem Meßpunkt 16 wenigstens eine Signalmessung in einem nächsten Arbeitsschritt 32 durchzuführen ist. Als Signalmessungen sind innerhalb der Route auf den jeweiligen Meßpunkt 16 zugeschnittene spezifische Signalmessungen über die Zentraleinheit 10 dem Meßgerät 12 eingegeben worden. Als Signalmessungen kommen beispielsweise Frequenzspektren, Zeitsignale, Demodulationsspektren oder Verteilungsdichten in Frage. Die Meßergebnisse dieser wenigstens einen Signalmessung werden in dem Meßgerät 12, konkret bezogen auf den aktuellen Meßpunkt 16, gespeichert. Hierbei kann je nach Verlauf der ersten Signalmessung beziehungsweise nach Vorgabe durch die Zentraleinheit 10 über die abgespeicherte Route in einem weiteren Schritt 34 eine weitere Signalmessung erfolgen. Nach Abschluß der erforderlichen, wenigstens einen Signalmessung an dem Meßpunkt 16 wird dem Routengänger 22 optisch und/oder akustisch am Meßgerät 12 signalisiert, daß er den nächsten Meßpunkt 16 der Route aufsuchen kann.

Auslösung des Übergangs von der Standardmessung 30 zu der wenigstens einen Signalmessung 32, 34 ist ein registrierbares Ereignis. Dieses registrierbare Ereignis wird, wie bereits erläutert, entweder von dem Überschreiten eines Schwellwertes innerhalb verschiedener Stufen/Kategorien der Standardmessung ausgelöst. Nach einem weiteren Ausführungsbeispiel kann das registrierbare Ereignis jedoch auch durch den Routengänger 22 selbst ausgelöst werden. Dies ist beispielsweise dann möglich, wenn die Standardmessung zwar keine Überschreitung des zuvor festgelegten Schwellwertes ergibt, der Routengänger 22 jedoch aufgrund von Beobachtungen annehmen kann, daß eine tiefere Überprüfung eines Aggregats 14 notwendig beziehungsweise sinnvoll ist. Ferner kann Auslöser des registrierbaren Ereignisses sein, wenn ein Vergleich des aktuell gemessenen Wertes der Standardmessung zu einem bei einer vorhergehenden Route gemessenen Wertes der Standardmessung für den gleichen Meßpunkt 16 eine erhebliche prozentuale Abweichung ergibt. Ist beispielsweise bei der vorhergehenden Messung eine Wertigkeit von 1 während der Standardmessung registriert worden, während jetzt eine Wertigkeit von 5 registriert wird, die zwar noch nicht den angenommenen Schwellwert 6 überschreitet, aber jedoch eine erhebliche Verschlechterung bedeutet, kann dies auch als registrierbares Ereignis zur Auslösung der wenigstens einen Signalmessung herangezogen werden.

Gegebenenfalls kann bei einer großen Abweichung der Wertigkeit der Standardmeßergebnisse zu den Standardmeßergebnissen der vorhergehenden Route zunächst eine Wiederholung der Standardmessung vorgesehen sein, ohne daß gleich auf die wenigstens eine Signalmessung 32, 34 erweitert wird. Die Wiederholung der Standardmeßaufgabe stellt somit die erweiterte Meßaufgabe dar, wobei erst nach erneutem Eintritt des registrierbaren Ereignisses die eigentliche erweiterte Meßaufgabe (Signalmessung) automatisch angezeigt und durchgeführt wird.

Nach einem weiteren Ausführungsbeispiel ist vorgesehen, daß bei der Datenübertragung von der Zentraleinheit 10 in das Meßgerät 12 neben den für die konkrete Route der Meßpunkte 16 übertragenen Daten weitere auf beliebige andere in der Zentraleinheit bekannte Meßpunkte 16 sich beziehende Daten übertragen werden. Dies können beispielsweise die an der Gesamtzahl der Meßpunkte 16 fehlenden Meßpunkte 16, die gerade nicht in der Route bearbeitet werden sollen, sein. Hierdurch wird im Meßgerät 12 im Hintergrund ein Pool angelegt, der bei Bedarf von dem Routengänger 22 während der Durchführung seiner Route in Anspruch genommen werden kann. Hierdurch wird es möglich, daß der Routengänger 22 Messungen an einem Meßpunkt 16 durchführen kann, der an sich nicht für die gerade aktuelle Route vorgesehen ist, aber in der Zentraleinheit bekannt ist. Dies ist hilfreich, wenn durch Beobachtungen des Routengängers 22 an dem dem Meßpunkt 16 zugeordneten Aggregat 14 eine Überprüfung notwendig beziehungsweise sinnvoll erscheint. Da die Meßpunkte 16 einer Route in der Regel über größere Entfernungen, beispielsweise Werkhallen usw., verteilt sein können, kann so in einfacher Weise ein zusätzlicher Meßpunkt 16 in die vorgesehene Route mit aufgenommen werden. An dem zusätzlichen Meßpunkt 16 erfolgt dann wiederum der in Figur 2 dargestellte Ablauf der Messung für einen Meßpunkt 16. Die Zuordnung des zusätzlichen Meßpunktes 16 zu der Route kann entweder über eine eingebbare Identifikationsnummer oder eine automatische Meßstellenerkennung erfolgen.

Nach einem weiteren Ausführungsbeispiel kann vorgesehen sein, daß das registrierbare Ereignis die Eingabe eines im Meßgerät abgespeicherten Ereigniscodes ist, der von dem Routengänger aus einer Liste vorgegebener Ereignisse auswählbar ist. Hierdurch kann der Routengänger Beobachtungen speichern, indem er einen seiner Beobachtung zugeordneten Ereigniscode auswählt und mit diesem Code die Umschaltung in die erweiterte Meßaufgabe, das heißt in die wenigstens eine Signalmessung, auslöst. Darüber hinaus kann das registrierbare Ereignis das Abspeichern eines Kommentars des Routengängers im Meßgerät, bezogen auf den aktuellen Meßpunkt sein, so daß aufgrund einer Beobachtung, die keinem konkreten zuvor abgespeicherten Ereigniscode zuordbar ist, ebenfalls eine Umschaltung in die wenigstens eine erweiterte Meßaufgabe erfolgt.

Ferner kann vorgesehen sein, wie in Figur 2 mit einem Arbeitsschritt 36 angedeutet ist, daß mit der Standardmessung der einen Standardmeßgröße eine zweite Standardmeßgröße, beispielsweise eine Drehzahl, mitgemessen wird, die die ursprünglich zu messende Standardmeßgröße beeinflußt. Hierdurch kann die Einstufung in die Wertigkeiten, beispielsweise von 0 bis 9, der gemessenen Standardmeßgröße verifiziert werden, da über die zusätzliche gemessene Standardmeßgröße im Schritt 36 bestimmte Einflüsse, beispielsweise eine Maschinenschwingstärke, bewertet werden können, die zu einer Beeinflussung der eigentlich gemessenen Standardmeßgröße führen. So kann beispielsweise trotz einer Überschreitung des angenommenen Alarmschwellwertes 6 durch die Standardmeßgröße das Umschalten in die Signalmessung blockiert sein, da über die mitgemessene zweite Standardmeßgröße 36 eine Beeinflussung der ersten Standardmeßgröße diagnostiziert wird, die nicht von einer Schädigung des überprüften Aggregats 14 herrührt. Somit erfaßt eine beeinflussende Meßgröße einen meßbaren Einfluß auf die eigentliche unter dem Einfluß schwankende Einzelkenngröße. Mittels einer gemessenen und gespeicherten Kalibrierfunktion werden die gemessenen Einzelkenngrößen auf einen festen Bezugswert, beispielsweise eine Maschinenschwingstärke bei 1475 Umdrehungen pro Minute, umgerechnet, damit sie im Meßgerät mit einfachen Schwellwerten verglichen werden können.

Insgesamt ergeben sich auf Grundlage der Funktionsmöglichkeiten der Abarbeitung der Standardmessung und der wenigstens einen Signalmessung vielfältige Auswertemöglichkeiten innerhalb der Route, die insgesamt zu einer erheblichen Vereinfachung führen. Die zu bearbeitenden und zu speichernden Datenmengen sind auf das unbedingt notwendige Minimum reduziert, ohne daß eine Beeinträchtigung der Qualität der Überwachung der schwingungserregten Aggregate eintritt. Mittels der nach Abschluß der Route von dem Meßgerät 12 in die Zentraleinheit 10 übertragenen Meßergebnisse der den einzelnen Meßpunkten 16 zugeordneten Messungen kann über Auswerte- und/oder Anzeigemittel, beispielsweise Drucker, Bildschirm usw., eine registrierte oder vermutete Zustandsverschlechterung einzelner, die Meßpunkte 16 aufweisenden Aggregate 14 zur Auswertung dargestellt werden und sofort zur Verfügung stehen. Dies können beispielsweise Trendanalysen über eine lange Betriebszeit der Aggregate 14 auf Grundlage der Standardmeßergebnisse und/oder konkrete Signalanalysen über den Zeit- und Frequenzverlauf auf Grundlage der Signalmeßergebnisse sein. Die eventuell einzuleitenden Maßnahmen, beispielsweise Stillegung, Reparatur und/oder Austausch einzelner Aggregate 14 kann geplant oder sofort eingeleitet werden.

Weiterhin kann vorgesehen sein, daß freie Meßaufgaben mit gespeicherten Schwellwerten oder Sollabweichungen auch außerhalb von Routen und Pool individuell vom Messenden am Meßgerät durchgeführt werden, bei denen die Verknüpfung zu einer erweiterten Meßaufgabe nach einem registrierbaren Ereignis genutzt werden kann, wenn es an der Standardmeßaufgabe hinterlegt wurde. Es kann dann nach der Route in der Zentraleinheit nachträglich eine Zuordnung zu Meßpunkten vorgenommen werden.

Hierdurch kann das System dahingehend optimiert werden, daß das Meßergebnis der wenigstens einen Standardmeßaufgabe ein registrierbares Ereignis bildet, das mit wenigstens einem weiteren registrierbaren Ereignis, beispielsweise eine der vorstehend beschriebenen Möglichkeiten von registrierbaren Ereignissen, verknüpft wird und nach den Boolschen Gleichungen ein weiteres registrierbares Ereignis zur Auslösung einer weiteren erweiterten Meßaufgabe bildet.

## Patentansprüche

1. System zum Überwachen von schwingungserregten Aggregaten
mit einer rechnergesteuerten Zentraleinheit und einem rechnergesteuerten, transportablen Messgerät,
wobei dem Messgerät von der Zentraleinheit im Wege einer Datenübertragung wenigstens ein Teil von in einer vorgebbaren Zeitspanne innerhalb vorgebbarer Fristen überprüfbaren Messpunkte aus einer Gesamtzahl den Aggregaten zugeordneten Messpunkten ***zuführbar ist,***
die Messpunkte im Messgerät automatisch als Route ***anzeigbar sind,*** und mittels des Messgerätes ***abarbeitbar sind***,
***so dass*** eine von der Zentraleinheit vorgegebene Messaufgabe pro Messpunkt ***ausführbar ist*** und nach Beendigung der Route die ermittelten Messdaten ***vom*** Messgerät **zur** Zentraleinheit imWege einer Datenübertragung ***übertragbar sind,***
und die Zentraleinheit Auswertemittel und/oder Anzeigemittel für die ermittelten Messdaten aufweist,
**dadurch gekennzeichnet, dass** in der Zentraleinheit für jeden der Messpunkte der Aggregate und/oder von Maschinenteilen der Aggregate wenigstens eine Standardmessaufgabe und wenigstens eine erweiterte Messaufgabe abgelegt ist, die entsprechend der gewählten Route in das Messgerät ***ladbar ist,***
an den Messpunkten nur die Standardmessaufgabe ***ausführbar ist*** und in Abhängigkeit des Eintritts eines den Messpunkt aufweisenden Aggregates und/oder Maschinenteil des Aggregates zuordbaren, registrierbaren Ereignisses an diesem Messpunkt wenigstens eine der erweiterten Messaufgaben automatisch ***anzeigbar und durchführbar ist***
und die Messergebnisse der durchgeführten Standard- und erweiterten Messungen in die Zentraleinheit ***übertragbar und dort auswertbar sind*.**

2. System nach Anspruch 1, **dadurch gekennzeichnet, daß** die Standardmeßaufgabe die Messung einer Einzelkenngröße beinhaltet, die einer spezifischen, auf das den jeweiligen Meßpunkt aufweisende Aggregat und/oder Maschinenteil des Aggregates zugeschnittenen Meßgröße zugeordenbar ist.

3. System nach einem der vorhergehenden Ansprüche, **dadurch gekennzeichnet, daß** den Einzelkenngrößen wenigstens ein Schwellwert zugeordenbar ist, mittels denen Fehlerkategorien definierbar sind wobei Werte von Einzelkenngrößen innerhalb einer Fehlerkategorie zu einem Fehlerprofil zusammenfaßbar sind.

4. System nach einem der vorhergehenden Ansprüche, **dadurch gekennzeichnet, daß** die erweiterte Meßaufgabe eine Wiederholung der Standardmeßaufgabe ist und erst nach erneutem Eintritt des registrierbaren Ereignisses die wenigstens eine erweiterte Meßaufgabe automatisch angezeigtbar und durchgeführbar ist.

5. System nach einem der vorhergehenden Ansprüche, **dadurch gekennzeichnet, daß** eine Fehlerkategorie wählbar ist, welche innerhalb der Einzelkenngrößen einer Standardmeßaufgabe bei Überschreiten dieser Fehlerkategorie das registrierbare Ereignis bildet.

6. System nach einem der vorhergehenden Ansprüche, **dadurch gekennzeichnet, daß** das registrierbare Ereignis die Beobachtung eines Routengängers ist.

7. System nach Anspruch 6, **dadurch gekennzeichnet, daß** das registrierbare Ereignis die Eingabe und Speicherung eines im Meßgerät abgespeicherten, den jeweiligen Meßpunkten zugeordneten Ereigniscodes ist, der vom Routengänger aus einer Liste vorgegebener Ereignisse auswählbar ist.

8. System nach Anspruch 6, **dadurch gekennzeichnet, daß** das registrierbare Ereignis das Abspeichern eines Kommentars des Routengängers im Meßgerät, bezogen auf den aktuellen Meßpunkt, ist.

9. System nach einem der vorhergehenden Ansprüche, **dadurch gekennzeichnet, daß** das registrierbare Ereignis die Überschreitung eines vorgebbaren Maximalwertes der relativen Abweichung des Meßergebnisses der Einzelkenngröße der Standardmessung der aktuellen Route gegenüber dem Meßwert einer Einzelkenngröße der Standardmessung einer, vorzugsweise der vorhergehenden Route am gleichen Meßpunkt ist.

10. System nach einem der vorhergehenden Ansprüche, **dadurch gekennzeichnet, daß** die wenigstens eine erweiterte Meßaufgabe die Messung von Signalverläufen, vorzugsweise eines Frequenz- und/oder Zeitverlaufs, beinhalten, die der Standardmeßaufgabe zugeordnet ist.

11. System nach Anspruch 10, **dadurch gekennzeichnet, daß** der Signalverlauf über die Einzelkenngröße der Standardmessung meßbar ist.

12. System nach einem der vorhergehenden Ansprüche, **dadurch gekennzeichnet, daß** die wenigstens eine Standardmeßaufgabe und/oder die wenigstens eine erweiterte Meßaufgabe als spezifische, typisierbare zugeschnittene Meßaufgaben für gleiche oder gleichartige Maschinenteile mit Meßpunkten in der Zentraleinheit ablegbar sind.

13. System nach einem der vorhergehenden Ansprüche, **dadurch gekennzeichnet, daß** dem Meßgerät durch die Zentraleinheit Standardmeßaufgaben und wenigstens eine erweiterte Meßaufgabe für weitere, nicht zur aktuellen Route gehördende Meßpunkte übertragbar sind, die im Hintergrund einen Pool der nicht aktuellen Meßpunkte bilden, und die wie zur Route gehörende Meßaufgaben verarbeitbar sind.

14. System nach einem der vorhergehenden Ansprüche, **dadurch gekennzeichnet, daß** der Standardmeßaufgabe wenigstens eine weitere Standardmeßaufgabe zugeordnet ist, bei der eine dem jeweiligen Meßpunkt zugeschnittene Meßgröße meßbar ist, die die ursprünglich zu messende Standardmeßgröße beeinflußt, mittels der das Meßergebnis der ersten Standardmeßaufgabe verifizierbar ist, und so zu einem registrierbaren Ereignis führen kann.

15. System nach einem der vorhergehenden Ansprüche, **dadurch gekennzeichnet, daß** wenigstens eine weitere freie Standardmeßaufgabe und zu dieser zugeordnet wenigstens eine erweiterte Meßaufgabe ohne Zuordnung zu einem konkreten Meßpunkt im Meßgerät abspeicherbar ist, die in Abhängigkeit des Eintritts des registrierbaren Ereignisses zusätzlich angezeigt und durchgeführbar ist und deren Meßergebnisse erst nachträglich in der Zentraleinheit einem Meßpunkt zuordenbar ist.

16. System nach Anspruch 15, **dadurch gekennzeichnet, daß** das Meßergebnis der wenigstens einen Standardmeßaufgabe ein registrierbares Ereignis bildet, das mit wenigstens einem weiteren registrierbaren Ereignis verknüpfbar ist und nach den Boolschen Gleichungen ein weiteres registrierbares Ereignis zur Auslösung einer weiteren erweiterten Meßaufgabe bildet.

17. System nach einem der vorhergehenden Ansprüche, **dadurch gekennzeichnet, daß** der Pegel eines einzelnen bestimmten Frequenzbandes aus dem gesamten Frequenzverlauf eines Signals die Einzelkenngröße der Standardmeßaufgabe ist, die mit wenigstens einem registrierbaren Ereignis zu der erweiterten Meßaufgabe führt, die der gesamte Frequenzverlauf dieses oder eines weiteren Signals ist.

18. System nach einem der vorhergehenden Ansprüche, **dadurch gekennzeichnet, daß** bei Nichteintritt eines registrierbaren Ereignisses an einem ersten von mehreren einem Aggregat und/oder Maschinenteil eines Aggregates zugeordneten Meßpunkt, die wenigstens eine Standardmeßaufgabe an den weiteren diesem Aggregat und/oder Maschinenteil zugeordneten weiteren Meßpunkten überspringbar ist.

19. System nach einem der vorhergehenden Ansprüche, **dadurch gekennzeichnet, daß** an einem ersten von mehreren einem Aggregat und/oder Maschinenteil eines Aggregates zugeordneten Meßpunkten die wenigstens eine allen Meßpunkten dieses Aggregates und/oder Maschinenteils zugeordnete Standardmeßaufgabe angezeigbar und durchgeführbar ist und die weiteren Meßpunkte erweiterte Meßaufgaben an den anderen Meßpunkten sind.

## Claims

1. System for monitoring units excited by oscillations, having a computer-controlled central processing unit and a computer-controlled, transportable measuring apparatus,
in which system at least some measuring points which can be inspected in a prescribable time period within prescribable time limits from a total number of measuring points assigned to the units can be supplied to the measuring apparatus by the central processing unit, by way of a data transmission,
the measuring points can be automatically displayed as a route in the measuring apparatus and can be processed by means of the measuring apparatus,
so that a measuring task prescribed by the central processing unit per measuring point can be executed and, after ending the route, the measurement data determined can be transmitted from the measuring apparatus to the central processing unit, by way of a data transmission,
and the central processing unit has evaluation means and/or display means for the measurement data determined,
**characterized in that** in the central processing unit there is stored for each of the measuring points of the units and/or of machine parts of the units at least one standard measuring task and at least one extended measuring task, which can be loaded into the measuring apparatus according to the selected route,
only the standard measuring task can be carried out at the measuring points
and at least one of the extended measuring tasks can be automatically displayed and carried out at the relevant measuring point as a function of the occurrence of a registrable event which can be assigned to the unit and/or machine part of the unit having the measuring point,
and the measurement results of the standard and extended measurements carried out can be transferred into the central processing unit and evaluated there.

2. System according to Claim 1, **characterized in that** the standard measuring task comprises the measurement of an individual characteristic value which can be assigned to a specific measured variable tailor-made for the unit and/or machine part of the unit having the respective measuring point.

3. System according to one of the preceding claims, **characterized in that** the individual characteristic values can be assigned at least one threshold value, by means of which error categories can be defined, it being possible for values of individual characteristic values to be combined within an error category to form an error profile.

4. System according to one of the preceding claims, **characterized in that** the extended measuring task is a repetition of the standard measuring task and the at least one extended measuring task can be automatically displayed and carried out only after renewed occurrence of the registrable event.

5. System according to one of the preceding claims, **characterized in that** it is possible to select an error category which, within the individual characteristic values of a standard measuring task, forms the registrable event when this error category is exceeded.

6. System according to one of the preceding claims, **characterized in that** the registrable event is the observation by a routine patroller.

7. System according to Claim 6, **characterized in that** the registrable event is the input and storing of an event code which is stored in the measuring apparatus, is assigned to the respective measuring points and can be selected by the routine patroller from a list of prescribed events.

8. System according to Claim 6, **characterized in that** the registrable event is the storing of a comment by the route patroller in the measuring apparatus, with respect to the measuring point at that time.

9. System according to one of the preceding claims, **characterized in that** the registrable event is the exceeding of a prescribable maximum value of the relative deviation of the measurement result for the individual characteristic value of the standard measurement of the route applicable at that time with respect to the measured value for an individual characteristic value of the standard measurement of a route, preferably the previous route, at the same measuring point.

10. System according to one of the preceding claims, **characterized in that** the at least one extended measuring task comprises the measurement of signal characteristics, preferably a frequency and/or time characteristic which is assigned to the standard measuring task.

11. System according to Claim 10, **characterized in that** the signal characteristic can be measured using the individual characteristic value of the standard measurement.

12. System according to one of the preceding claims, **characterized in that** the at least one standard measuring task and/or the at least one extended measuring task can be stored in the central processing unit as specific, typifiable, tailor-made measuring tasks for the same or same type of machine parts with measuring points.

13. System according to one of the preceding claims, **characterized in that** the measuring apparatus can have transmitted to it by the central processing unit standard measuring tasks and at least one extended measuring task for other measuring points, not belonging to the route applicable at that time, which form in the background a pool of the measuring points not applicable at that time, and which can be processed like measuring tasks belonging to the route.

14. System according to one of the preceding claims, **characterized in that** the standard measuring task is assigned at least one further standard measuring task, in which there can be measured a measured variable which is tailor-made for the respective measuring point, influences the standard measured variable originally to be measured and by means of which the measurement result of the first standard measuring task can be verified, and can thus lead to a registrable event.

15. System according to one of the preceding claims, **characterized in that** there can be stored in the measuring apparatus at least one further free standard measuring task and, assigned to the latter, at least one extended measuring task without assignment to an actual measuring point, which task is additionally displayed and can be carried out as a function of the occurrence of the registrable event and the measurement results of which can only be assigned to a measuring point subsequently in the central processing unit.

16. System according to Claim 15, **characterized in that** the measurement result of the at least one standard measuring task forms a registrable event which can be linked with at least one further registrable event and, on the basis of Boolean equations, forms a further registrable event for the initiation of a further extended measuring task.

17. System according to one of the preceding claims, **characterized in that** the level of a single specific frequency band from the overall frequency characteristic of a signal is the individual characteristic value of the standard measuring task which, with at least one registrable event, leads to the extended measuring task, which is the complete frequency characteristic of this or another signal.

18. System according to one of the preceding claims, **characterized in that**, if there is no occurrence of a registrable event at a first of a plurality of measuring points assigned to a unit and/or machine part of a unit, the at least one standard measuring task can be skipped at the further measuring points assigned to this unit and/or machine part.

19. System according to one of the preceding claims, **characterized in that** at a first of a plurality of measuring points assigned to a unit and/or machine part of a unit the at least one standard measuring task assigned to all the measuring points of this unit and/or machine part can be displayed and carried out and extended measuring tasks are carried out at the other measuring points.

## Revendications

1. Système de surveillance pour appareils à excitation par oscillations comprenant une unité centrale commandée par ordinateur et un appareil de mesure transportable commandé par ordinateur, au moins une partie des points de mesure qui peuvent être contrôlés dans une période de temps à prédéfinir dans des délais à prédéfinir parmi un nombre total de points de mesure associés aux appareils pouvant ici être acheminée à l'appareil depuis l'unité centrale au moyen d'une transmission de données, les points de mesure pouvant être affichés automatiquement dans l'appareil de mesure sous la forme d'un itinéraire et pouvant être traités au moyen de l'appareil de mesure de manière à ce qu'une tâche de mesure prédéfinie puisse être réalisée par l'unité centrale pour chaque point de mesure et, après avoir terminé l'itinéraire, les données de mesure déterminées puissent être transmises par l'appareil de mesure vers l'unité centrale au moyen d'une transmission de données et l'unité centrale présentant des moyens d'analyse et/ou des moyens d'affichage pour les données de mesure déterminées, **caractérisé en ce qu'**au moins une tâche de mesure standard et au moins une tâche de mesure étendue est stockée dans l'unité centrale pour chacun des points de mesure des appareils et/ou des pièces mécaniques des appareils, laquelle peut être chargée dans l'appareil de mesure en fonction de l'itinéraire sélectionné, seule la tâche de mesure standard peut être réalisée sur les points de mesure et au moins l'une des tâches de mesure étendues peut être affichée et réalisée automatiquement en fonction de l'occurrence d'un événement enregistrable à ce point de mesure et associable à l'un des appareils et/ou pièces mécaniques de l'appareil qui présente le point de mesure, et les résultats des mesures standard et étendues effectuées peuvent être transmis dans l'unité centrale et y être analysés.

2. Système selon la revendication 1, **caractérisé en ce que** la tâche de mesure standard comprend la mesure d'une grandeur caractéristique individuelle qui peut être associée à une grandeur de mesure spécifique personnalisée en fonction de l'appareil et/ou de la pièce mécanique de l'appareil qui présente le point de mesure correspondant.

3. Système selon l'une des revendications précédentes, **caractérisé en ce qu'**au moins une valeur de seuil à l'aide de laquelle peuvent être définies des catégories de défauts peut être associée aux grandeurs caractéristiques individuelles, les valeurs des grandeurs caractéristiques individuelles pouvant être regroupées dans une catégorie de défauts pour former un profil de défaut.

4. Système selon l'une des revendications précédentes, **caractérisé en ce que** la tâche de mesure étendue est une répétition de la tâche de mesure standard et l'au moins une tâche de mesure étendue peut seulement être affichée automatiquement et réalisée après une nouvelle occurrence de l'événement enregistrable.

5. Système selon l'une des revendications précédentes, **caractérisé en ce qu'**il est possible de sélectionner une catégorie de défauts, laquelle, au sein des grandeurs caractéristiques individuelles d'une tâche de mesure standard, constitue l'événement enregistrable en cas de dépassement de cette catégorie de défauts.

6. Système selon l'une des revendications précédentes, **caractérisé en ce que** l'événement enregistrable est l'observation d'un sourcier.

7. Système selon la revendication 6, **caractérisé en ce que** l'événement enregistrable est la saisie et la mémorisation d'un code d'événement mémorisé dans l'appareil de mesure et associé aux points de mesure respectifs, lequel peut être sélectionné par le sourcier à partir d'une liste d'événements prédéfinis.

8. Système selon la revendication 6, **caractérisé en ce que** l'événement enregistrable est la mémorisation d'un commentaire du sourcier dans l'appareil de mesure à propos du point de mesure actuel.

9. Système selon l'une des revendications précédentes, **caractérisé en ce que** l'événement enregistrable est le dépassement d'une valeur maximale pouvant être prédéfinie de la différence relative entre le résultat de la mesure des grandeurs caractéristiques individuelles de la mesure standard de l'itinéraire actuel par rapport à la valeur mesurée d'une grandeur caractéristique individuelle de la mesure standard d'un itinéraire, de préférence du précédent, au même point de mesure.

10. Système selon l'une des revendications précédentes, **caractérisé en ce que** l'au moins une tâche de mesure étendue comprend la mesure des courbes du signal, de préférence d'une courbe de la fréquence et/ou du temps, laquelle est associée à la tâche de mesure standard.

11. Système selon la revendication 10, **caractérisé en ce que** la courbe du signal peut être mesurée par le biais des grandeurs caractéristiques individuelles de la mesure standard.

12. Système selon l'une des revendications précédentes, **caractérisé en ce que** l'au moins une tâche de mesure standard et/ou l'au moins une tâche de mesure étendue peuvent être stockées dans l'unité centrale sous la forme de tâches de mesure spécifiques, personnalisées et pouvant être typées pour des pièces mécaniques identiques ou du même type comportant des points de mesure.

13. Système selon l'une des revendications précédentes, **caractérisé en ce que** des tâches de mesure standard et au moins une tâche de mesure étendue pour des points de mesure supplémentaires ne faisant pas partie de l'itinéraire actuel peuvent être transmises à l'appareil de mesure par l'unité centrale, lesquelles constituent en arrière-plan un regroupement des points de mesure non actuels et peuvent être traitées de la même manière que les tâches de mesure faisant partie de l'itinéraire.

14. Système selon l'une des revendications précédentes, **caractérisé en ce qu'**au moins une tâche de mesure standard supplémentaire est associée à la tâche de mesure standard, avec laquelle peut être mesurée une grandeur de mesure personnalisée en fonction du point de mesure correspondant, laquelle influence la grandeur de mesure standard à mesurer initialement, à l'aide de laquelle le résultat de la mesure de la première tâche de mesure standard peut être vérifié et peut ainsi donner lieu à un événement enregistrable.

15. Système selon l'une des revendications précédentes, **caractérisé en ce qu'**au moins une tâche de mesure standard libre supplémentaire et au moins une tâche de mesure étendue associée à celle-ci peut être mémorisée dans l'appareil de mesure sans être associée à un point de mesure particulier, laquelle est affichée et peut être réalisée en plus en fonction de l'occurrence de l'événement enregistrable et ses résultats de mesure ne peuvent être associés qu'ultérieurement dans l'unité centrale à un point de mesure.

16. Système selon la revendication 15, **caractérisé en ce que** le résultat de la mesure de l'au moins une tâche de mesure standard constitue un événement enregistrable qui peut être lié à au moins un autre événement enregistrable et constitue, après mise en équation booléenne, un événement enregistrable supplémentaire destiné à déclencher une tâche de mesure étendue supplémentaire.

17. Système selon l'une des revendications précédentes, **caractérisé en ce que** le niveau d'une bande de fréquences donnée issue de la courbe de fréquence totale d'un signal est la grandeur caractéristique individuelle de la tâche de mesure standard qui, avec au moins un événement enregistrable, donne lieu à la tâche de mesure étendue qui est la courbe de fréquence totale de ce signal ou d'un signal supplémentaire.

18. Système selon l'une des revendications précédentes, **caractérisé en ce qu'**en cas de non-occurrence d'un événement enregistrable au niveau d'un premier point de mesure parmi plusieurs points de mesure associés à un appareil et/ou à une pièce mécanique d'un appareil, l'au moins une tâche de mesure standard peut sauter aux points de mesure supplémentaires associés à cet appareil et/ou cette pièce mécanique.

19. Système selon l'une des revendications précédentes, **caractérisé en ce que** la tâche de mesure standard associée à tous les points de mesure d'un appareil et/ou d'une pièce mécanique d'un appareil peut être affichée et réalisée en un premier point de mesure parmi plusieurs points de mesure associés à cet appareil et/ou cette pièce mécanique et les tâches de mesure étendues aux points de mesure supplémentaires s'appliquent aux autres points de mesure.
